# FASCICULE DE BREVET EUROPEEN

(11) **EP 4 069 568 B1**
(45) Date de publication et mention de la délivrance du brevet: **20.05.2026**
(21) Numéro de dépôt: 20803567.5
(22) Date de dépôt: 12.11.2020
(51) Int. Cl.: B60W 50/10, B60W 50/12, B60W 50/08, B62D 15/02, B60W 30/095, G05D 1/00, B60W 30/09, B60W 50/00

(54) **PROCÉDÉ DE PILOTAGE D'UN VÉHICULE AUTOMOBILE**
VERFAHREN ZUR STEUERUNG EINES KRAFTFAHRZEUGS
METHOD FOR CONTROLLING A MOTOR VEHICLE

(30) Priorité: 06.12.2019 FR 1913862
(43) Date de publication de la demande: 12.10.2022
(73) Titulaire: Ampere SAS, 92100 Boulogne-Billancourt (FR); NISSAN MOTOR Co., Ltd., Yokohama-shi, Kanagawa 221-0023 (JP)
(72) Inventeur: BRUNO, Geoffrey, 92130 Issy les Moulineaux (FR); CHEDEVILLE, Sébastien, 27120 Pacy Sur Eure (FR); DO, Anh-Lam, 92160 Antony (FR); LETELLIER, Nicolas, 27340 Pont de l'arche (FR); NGUYEN, Khoa Duc, 78500 Sartrouville (FR)
(74) Mandataire: Jacobacci & Partners France
(86) Numéro de dépôt international: PCT/EP2020/081825
(87) Numéro de publication internationale: WO 2021/110377

(56) Documents cités:
- DE-A1- 102011 080 789
- DE-A1- 102018 202 847
- FR-A1- 3 078 306
- US-A1- 2018 170 431
- KAHVECI N E: "Adaptive steering control for uncertain vehicle dynamics with crosswind effects and steering angle constraints", VEHICULAR ELECTRONICS AND SAFETY, 2008. ICVES 2008. IEEE INTERNATIONAL CONFERENCE ON, IEEE, PISCATAWAY, NJ, USA, 22 September 2008 (2008-09-22), pages 168 - 173, XP031395990, ISBN: 978-1-4244-2359-0
- ACKERMANN J ET AL: "LINEAR AND NONLINEAR CONTROLLER DESIGN FOR ROBUST AUTOMATIC STEERING", IEEE TRANSACTIONS ON CONTROL SYSTEMS TECHNOLOGY, IEEE SERVICE CENTER, NEW YORK, NY, US, vol. 3, no. 1, 1 March 1995 (1995-03-01), pages 132 - 143, XP000508621, ISSN: 1063-6536, DOI: 10.1109/87.370719
- SAN DIEGO ET AL: "Pmceedings of the American Control Conference LPV-Based Control of Systems with Amplitude and Rate Actuator Saturation Constraints", 1 June 1999 (1999-06-01), XP055769076, Retrieved from the Internet <URL:https://ieeexplore.ieee.org/stampPDF/getPDF.jsp?tp=&arnumber=782353&ref=aHR0cHM6Ly9pZWVleHBsb3JlLmllZWUub3JnL2RvY3VtZW50Lzc4MjM1Mw==> [retrieved on 20210126]

## Description

### DOMAINE TECHNIQUE DE L'INVENTION

La présente invention concerne de manière générale l'automatisation du suivi de trajectoire d'appareils automobiles.

Elle trouve une application particulièrement avantageuse dans le cadre des aides à la conduite de véhicules automobiles, mais elle peut également s'appliquer au domaine de l'aéronautique ou de la robotique.

Elle concerne plus particulièrement un procédé de pilotage autonome d'un actionneur d'un système de pilotage d'un appareil selon la revendication 1.

Elle concerne aussi un appareil équipé d'un calculateur adapté à mettre en œuvre ce procédé.

### ETAT DE LA TECHNIQUE

Dans un souci de sécurisation, on équipe de plus en plus souvent les véhicules automobiles de systèmes d'aide à la conduite ou de systèmes de conduite autonome.

Parmi ces systèmes, on connait notamment les systèmes de freinage d'urgence automatique (plus connu sous l'abréviation AEB, de l'anglais « Automatic Emergency Braking »), conçus pour éviter toute collision avec des obstacles situés dans la voie empruntée par le véhicule, en agissant simplement sur le système de freinage conventionnel du véhicule automobile.

Il existe toutefois des situations dans lesquelles ces systèmes de freinage d'urgence ne permettent pas d'éviter la collision ou ne sont pas utilisables (par exemple si un engin suit de près le véhicule automobile).

Pour ces situations, il a été développé des systèmes d'évitement automatique (plus connu sous l'abréviation AES, de l'anglais « Automatic Evasive Steering » ou « Automatic Emergency Steering ») qui permettent d'éviter l'obstacle en déviant le véhicule de sa trajectoire, soit en agissant sur la direction du véhicule, soit en agissant sur le système de freinage différentiel du véhicule.

Les documents DE 10 2018 202 847 A1, FR 3 078 306 A1 et DE 10 2011 080 789 A1 divulguent, à titre d'exemple, de tels systèmes de commande d'évitement de collision pour véhicules.

Il arrive que ce système AES, pour éviter un obstacle, entre en conflit avec le conducteur de façon à forcer le véhicule à suivre une trajectoire d'évitement différente de celle souhaitée par le conducteur. Il s'ensuit au mieux une gêne pour le conducteur (qui risque alors ensuite de désactiver le système AES au détriment de sa sécurité), au pire des incompréhensions pour le conducteur pouvant amener ce dernier à avoir une mauvaise compréhension de la situation.

La gestion de l'interaction entre le conducteur et ce système AES s'avère donc en pratique délicate.

### PRESENTATION DE L'INVENTION

La présente invention propose donc d'améliorer les systèmes AES existant, en leur ajoutant une fonction supplémentaire garantissant un meilleur arbitrage entre les souhaits du conducteur et les décisions prises par le système AES.

Plus particulièrement, on propose selon l'invention un procédé tel que défini dans l'introduction, dans lequel la consigne de pilotage est calculée en fonction dudit paramètre et en fonction de la position dudit appareil par rapport à la trajectoire de référence.

Ainsi, grâce à l'invention, la trajectoire empruntée par l'appareil automobile dépend non seulement de la consigne générée par le système AES, mais aussi de la volonté exprimée par le conducteur.

L'invention permet alors d'arbitrer et de favoriser le système AES ou la volonté exprimée par le conducteur, en fonction des circonstances rencontrées, et en particulier en fonction de la position de l'appareil automobile par rapport à l'obstacle.

L'invention permet ainsi d'éviter que le conducteur puisse se retrouver dans des situations d'incompréhension, tout en lui garantissant le meilleur confort de conduite possible.

D'autres caractéristiques avantageuses et non limitatives du procédé de pilotage conforme à l'invention, prises individuellement ou selon toutes les combinaisons techniquement possibles, sont les suivantes :
- l'appareil est un véhicule automobile qui est adapté à rouler sur route et qui comprend au moins une roue directrice,
- le moyen de commande manuel est un volant,
- ledit système de pilotage permet le braquage de chaque roue directrice,
- le paramètre est relatif au couple exercé par le conducteur du véhicule automobile sur le volant ;
- il est prévu de déterminer un indicateur dont la valeur dépend de la zone dans laquelle se trouve ledit appareil et dudit paramètre, il est prévu d'élaborer une consigne préliminaire de pilotage dudit actionneur permettant de ramener ledit appareil vers la trajectoire de référence, et il est prévu de corriger la consigne préliminaire en fonction de la valeur dudit indicateur ;
- ledit indicateur étant adapté à prendre uniquement l'une ou l'autre de deux valeurs, il est prévu de déterminer, en fonction dudit indicateur, un indicateur corrigé qui varie continûment entre deux valeurs, et la consigne préliminaire est corrigée en multipliant sa valeur par celle de l'indicateur corrigé ;
- lorsque ledit indicateur corrigé varie, la vitesse de variation dudit indicateur corrigé est déterminée en fonction d'une vitesse dudit véhicule automobile et du rayon de courbure de la route, de manière à ce que l'accélération latérale du véhicule automobile ne dépasse pas un seuil déterminé ;
- la consigne préliminaire est déduite d'une consigne d'angle de braquage des roues qui est elle-même calculée en fonction de la position dudit appareil par rapport à la trajectoire de référence et qui est filtrée au moyen d'un contrôleur qui satisfait un modèle limiteur d'amplitude de consigne et un modèle limiteur de variation de consigne ;
- la calculateur considère quatre zones associées à quatre algorithmes de calcul différent, dont :
   * une zone située en amont de l'obstacle, entre la trajectoire de référence et une ligne de protection au-delà de laquelle toute collision avec l'obstacle est évitée,
   * une zone située à hauteur et en aval de l'obstacle, entre la trajectoire de référence et la ligne de protection,
   * une zone située en amont de l'obstacle, du côté de la trajectoire de référence qui est opposé à la ligne de protection, et
   * une zone dont une partie est située en amont de l'obstacle, du côté de la ligne de protection qui est opposé à la trajectoire de référence, et dont une autre partie est située à hauteur et en aval de l'obstacle, du côté de la trajectoire de référence qui est opposé à la ligne de protection ;
- lorsque ledit appareil se déplace d'une première zone à une seconde zone, le calculateur continue d'utiliser l'algorithme associé à la première zone tant que ledit appareil n'a pas dépassé une trajectoire d'Hystérésis déterminée en fonction de la trajectoire de référence ;
- la trajectoire de référence est déterminée de façon à éviter un obstacle en contournant au moins une limite de protection située autour d'une partie de l'obstacle ;
- une première limite de protection présente une forme et une position qui sont fonction de la forme de l'obstacle et/ou des erreurs de mesure des capteurs équipant le véhicule automobile et/ou de la vitesse de l'obstacle ;
- une seconde limite de protection présente une forme et une position qui sont fonction d'une marge de sécurité prédéterminée.

L'invention propose également un appareil automobile tel qu'une voiture, comprenant au moins un actionneur qui est adapté à influer sur la trajectoire dudit appareil et un calculateur pour piloter ledit actionneur, qui est programmé pour mettre en œuvre un procédé tel que précité.

Bien entendu, les différentes caractéristiques de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
La figure 1 est une vue schématique de dessus d'un véhicule automobile circulant sur une route, sur laquelle la trajectoire d'évitement que ce véhicule doit emprunter est représentée ;
La figure 2 est un schéma bloc illustrant l'architecture d'un système de commande adapté à mettre en œuvre un procédé de pilotage conforme à l'invention ;
La figure 3 est une vue schématique d'un obstacle, du véhicule automobile de la figure 1, de sa trajectoire d'évitement de l'obstacle et de différentes zones utilisées dans le cadre du procédé de pilotage conforme à l'invention ;
La figure 4 est une vue schématique d'un obstacle, de la trajectoire d'évitement de l'obstacle et de deux trajectoires envisageables dans le cadre d'un premier exemple d'utilisation du procédé de pilotage conforme à l'invention ;
La figure 5 est un graphique, cadencé sur celui de la figure 4, représentant l'évolution de différents couples de pilotage du véhicule automobile ;
La figure 6 est une vue schématique d'un obstacle, de la trajectoire d'évitement de l'obstacle et de deux trajectoires envisageables dans le cadre d'un premier exemple d'utilisation du procédé de pilotage conforme à l'invention ;
La figure 7 est un graphique, cadencé sur celui de la figure 6, représentant l'évolution de différents couples de pilotage du véhicule automobile ;
La figure 8 est une vue schématique d'un obstacle, de la trajectoire d'évitement de l'obstacle et de deux trajectoires envisageables dans le cadre d'un premier exemple d'utilisation du procédé de pilotage conforme à l'invention ;
La figure 9 est un graphique, cadencé sur celui de la figure 8, représentant l'évolution de différents couples de pilotage du véhicule automobile ;
La figure 10 est une vue schématique d'un obstacle, de la trajectoire d'évitement de l'obstacle et de deux trajectoires envisageables dans le cadre d'un premier exemple d'utilisation du procédé de pilotage conforme à l'invention ;
La figure 11 est un graphique, cadencé sur celui de la figure 10, représentant l'évolution de différents couples de pilotage du véhicule automobile ;
La figure 12 est une vue schématique d'un obstacle, de la trajectoire d'évitement de l'obstacle et de deux trajectoires envisageables dans le cadre d'un premier exemple d'utilisation du procédé de pilotage conforme à l'invention ;
La figure 13 est un graphique, cadencé sur celui de la figure 12, représentant l'évolution de différents couples de pilotage du véhicule automobile ;
La figure 14 est une vue schématique d'un obstacle, de la trajectoire d'évitement de l'obstacle et de deux trajectoires envisageables dans le cadre d'un premier exemple d'utilisation du procédé de pilotage conforme à l'invention ;
La figure 15 est un graphique, cadencé sur celui de la figure 14, représentant l'évolution de différents couples de pilotage du véhicule automobile ;
La figure 16 est un graphique illustrant un exemple de variation de consigne d'angle de braquage en fonction du temps ;
La figure 17 est un graphique cadencé sur celui de la figure 16, illustrant les instants d'activation et de désactivation des systèmes de pilotage du véhicule de la figure 1 dans le cadre du procédé de pilotage conforme à l'invention ; et
La figure 18 est un graphique cadencé sur celui de la figure 16, illustrant les variations des paramètres K1 et K1ᵣₜ utilisés dans le cadre du procédé conforme à l'invention.

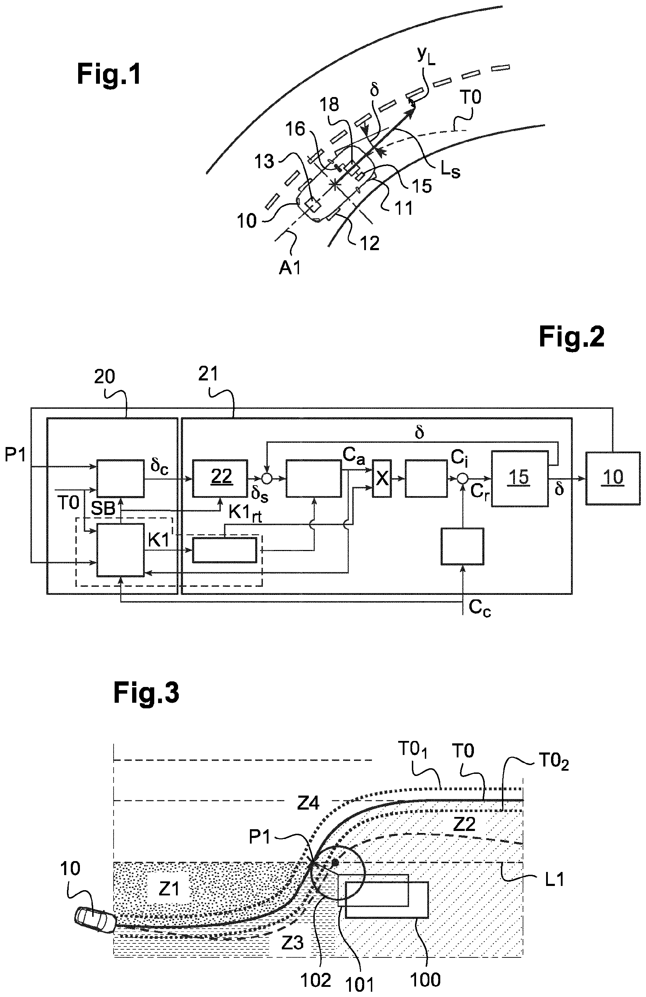

Sur la figure 1, on a représenté un véhicule automobile 10 roulant sur une route. Dans l'exemple qui va suivre, on considérera le cas où la loi impose une conduite du véhicule sur la voie de droite, mais l'invention pourra s'appliquer de la même façon, de manière symétrique, en cas de conduite à gauche (comme c'est le cas par exemple au Royaume-Uni).

Comme le montre la figure 1, le véhicule automobile 10 comprend classiquement un châssis qui délimite un habitacle, deux roues avant 11 directrices, et deux roues arrière 12 non directrices. En variante, ces deux roues arrière pourraient également être directrices.

Ce véhicule automobile 10 comporte un système de direction 18 conventionnel permettant d'agir sur l'orientation des roues avant 11 de façon à pouvoir faire tourner le véhicule. Dans l'exemple considéré, le système de direction 18 est commandé par un actionneur 15 de direction assistée qui permet d'agir sur l'orientation des roues avant 11 en fonction de l'orientation du volant 16 et/ou, selon les cas, en fonction d'une consigne émise par un calculateur 13.

En complément, on pourrait prévoir que ce véhicule automobile comporte un système de freinage différentiel permettant d'agir différemment sur les vitesses de rotation des roues avant 11 (voire aussi sur celles des roues arrière 12) de façon à ralentir le véhicule automobile en le faisant tourner. Ce système de freinage différentiel comprendrait par exemple un différentiel piloté ou des moteurs électriques placés au niveau des roues du véhicule.

Dans la suite de cet exposé, le système de direction considéré sera formé par le seul système de direction conventionnel. En variante, il pourrait être formé par la combinaison du système de direction conventionnel et du système de freinage différentiel.

Le calculateur 13 est prévu pour piloter l'actionneur 15. Il comporte à cet effet au moins un processeur, au moins une mémoire et différentes interfaces d'entrée et de sortie.

Grâce à ses interfaces d'entrée, le calculateur 13 est adapté à recevoir des signaux d'entrée provenant de différents capteurs.

Parmi ces capteurs, il est par exemple prévu :
- un dispositif tel qu'une caméra frontale, permettant de repérer la position du véhicule par rapport à sa voie de circulation,
- un dispositif tel qu'un télédétecteur RADAR ou LIDAR, permettant de détecter un obstacle 100 se trouvant sur la trajectoire du véhicule automobile 10 (figure 3),
- au moins un dispositif latéral tel qu'un télédétecteur RADAR ou LIDAR, permettant d'observer l'environnement sur les côtés du véhicule,
- un dispositif tel qu'un gyromètre, permettant de déterminer la vitesse de rotation en lacet (autour d'un axe vertical) du véhicule automobile 10, et
- un capteur d'effort exercé sur le volant et/ou un capteur de position angulaire du volant.

Grâce à ses interfaces de sortie, le calculateur 13 est adapté à transmettre une consigne à l'actionneur 15 de direction assistée.

Il permet ainsi de faire en sorte que le véhicule suive au mieux, et si les conditions le justifient, une trajectoire de référence, formée dans l'exemple illustré sur la figure 3 par une trajectoire d'évitement T0 d'un obstacle 100.

Grâce à sa mémoire, le calculateur 13 mémorise des données utilisées dans le cadre du procédé décrit ci-dessous.

Il mémorise notamment une application informatique, constituée de programmes d'ordinateur comprenant des instructions dont l'exécution par le processeur permet la mise en œuvre par le calculateur du procédé décrit ci-après.

Il mémorise notamment deux applications informatiques dont une première application ci-après appelée « système AES 20 », permettant de déterminer la trajectoire d'évitement T0 à suivre ainsi qu'une consigne d'angle de braquage δ_{c} permettant au véhicule automobile 10 de suivre cette trajectoire d'évitement T0, et une seconde application ci-après appelée « système EPS 21 », permettant de déterminer la consigne à envoyer à l'actionneur 15 de direction assistée, compte tenu de la consigne d'angle de braquage δ_{c} précitée et de la volonté exprimée par le conducteur.

La volonté exprimée par le conducteur est ici déduite du couple exercé par le conducteur sur le volant 16, lequel sera ci-après appelé « couple au volant Cc ». En variante, elle pourrait être déduite en combinaison de ce couple au volant et d'autres facteurs tels que par exemple la position angulaire du volant.

Avant de décrire en détail ces deux systèmes AES et EPS, on peut introduire les différentes variables qui seront utilisées dans le cadre du procédé de pilotage décrit ci-après, et dont certaines sont illustrées sur la figure 1.

L'angle de braquage que font les roues avant directrices avec l'axe longitudinal A1 du véhicule automobile 10 sera noté « δ » et sera exprimé en radian.

L'écart latéral entre l'axe longitudinal A1 du véhicule automobile 10 (passant par le centre de gravité CG) et la trajectoire d'évitement T0, à une distance de visée « Is » située à l'avant du véhicule, sera noté « y_{L} » et sera exprimé en mètres.

La distance de visée « Is » précitée sera mesurée à partir du centre de gravité CG et s'exprimera en mètres.

La vitesse du véhicule automobile selon l'axe longitudinal A1 sera noté « V » et s'exprimera en m/s.

Sur la figure 2, on a représenté les deux systèmes AES 20 et EPS 21 précités. On peut alors expliquer la façon selon laquelle ces systèmes fonctionnent en pratique.

Lorsque le véhicule automobile 10 roule sur une route selon une trajectoire initiale (non représentée et sensiblement parallèle à la route) et qu'un obstacle 100 potentiellement dangereux est détecté, le système AES est activé.

Un obstacle potentiellement dangereux est un obstacle fixe situé sur la trajectoire initiale ou à proximité de celle-ci, ou un obstacle mobile dont la trajectoire risque de couper la trajectoire initiale.

Ce système AES 20 reçoit alors en entrées des paramètres P1 permettant de caractériser l'attitude du véhicule automobile 10 dans son environnement. Il s'agit par exemple de son écart latéral y_{L} à la distance de visée Is, de son cap par rapport à la route, de sa vitesse de lacet...

Il est en outre adapté à déterminer ou à recevoir d'un autre calculateur une trajectoire d'évitement T0 de l'obstacle 100. Cette trajectoire d'évitement T0 est par exemple élaborée en fonction des paramètres P1 précités et des caractéristiques de l'obstacle 100 (dimensions, vitesse...).

Sur la figure 3 et dans l'ensemble des exemples qui seront ci-après considérés, on observe que cette trajectoire d'évitement T0 est prévue pour éviter l'obstacle 100 par la gauche, en contournant des limites de protection 101 et 102 permettant d'éviter toute collision avec l'obstacle.

La première limite de protection 101, de forme rectangulaire, présente une forme qui est fonction de la forme de l'obstacle 100 et des éventuelles erreurs de mesure des capteurs équipant le véhicule automobile. Elle présente une position qui tient compte de la vitesse éventuelle de l'obstacle 100.

La seconde limite de protection 102 présente des dimensions choisies en fonction de la marge de sécurité que l'on souhaite se donner. Elle se présente ici sous la forme d'un cercle dont le centre est situé sur le coin de la première limite de protection 101 qui se trouve au plus près de la trajectoire d'évitement T0.

La manière d'élaborer la trajectoire d'évitement T0 ne fait pas ici précisément l'objet de la présente invention et ne sera donc pas décrit en détail.

Compte tenu des paramètres P1 et de la trajectoire d'évitement T0, le système AES 20 est en mesure de déterminer une consigne préliminaire d'angle de braquage δ_{c} des roues avant 11 du véhicule, qui permettrait au véhicule de suivre au mieux cette trajectoire d'évitement T0.

Le système EPS 21, qui reçoit en entrée cette consigne préliminaire d'angle de braquage δ_{c}, utilise un contrôleur 22 pour déterminer une consigne filtrée d'angle de braquage δₛ, qui est saturée en amplitude et en vitesse de variation.

En d'autre termes, la consigne préliminaire d'angle de braquage δ_{c} est écrêtée si elle dépasse (en valeur absolue) un seuil prédéterminé, et elle est régulée de façon à ne pas pouvoir varier plus vite qu'un autre seuil prédéterminé.

Ces seuils sont choisis de façon à ce que le véhicule automobile 10 reste maitrisable par le conducteur à tout moment, dans l'éventualité où il reprendrait seul le contrôle du véhicule.

L'écart entre cette consigne filtrée d'angle de braquage δₛ et l'angle de braquage δ instantané des roues directrices 11 (mesuré par un capteur d'angle) est ensuite utilisé pour déterminer une consigne de couple préliminaire Ca qui, si elle était directement envoyée à l'actionneur 15 de direction assistée, permettrait de commander le braquage des roues conformément à la consigne filtrée d'angle de braquage δₛ.

Cette consigne de couple préliminaire Ca est ensuite multipliée par un paramètre K1ᵣₜ dont le calcul sera explicité ci-après, ce qui permet d'obtenir une consigne de couple intermédiaire Ci.

L'écart entre cette consigne de couple intermédiaire Ci et le couple au volant Cc (à un terme multiplicateur près) permet d'obtenir une consigne de couple finale Cr qui est envoyée à l'actionneur 15 de direction assistée.

L'invention porte ici plus précisément sur le calcul du paramètre K1ᵣₜ précité.

Ce paramètre, ci-après appelé « gain corrigé K1ᵣₜ », est utilisé pour désactiver le système AES 20 lorsque les conditions le permettent et que le conducteur semble souhaiter reprendre la main sur la conduite du véhicule automobile 10.

Pour contrôler si les conditions le permettent, il est ici prévu de déterminer dans quelle zone de l'environnement de l'obstacle 100 le véhicule automobile 10 se trouve.

Avant de détailler la manière selon laquelle ce gain corrigé K1ᵣₜ est calculé, on peut détailler les zones de l'environnement qui seront considérées pour mettre en œuvre ces calculs.

Comme le montre la figure 3, on distinguera préférentiellement quatre zones de l'environnement. On pourrait en variante en considérer un nombre plus restreint (au moins deux) ou un nombre plus important, et on pourrait délimiter ces zones de façon différente.

Ici, ces quatre zones sont définies par rapport à la trajectoire d'évitement T0, par rapport à l'obstacle 100 et par rapport une ligne de protection L1 au-delà de laquelle toute collision avec l'obstacle 100 est évitée.

Cette ligne de protection L1 correspond plus précisément à une ligne virtuelle qui est parallèle à la route (elle est ici rectiligne, mais elle pourrait être courbée si la route l'était) et qui passe par le point P₁ de la seconde limite de protection 102 qui est le plus éloigné de l'obstacle 100.

La traversée de cette ligne par le véhicule automobile 10 (et plus précisément par son centre de gravité CG) permet de s'assurer que l'obstacle 100 sera bien évité.

Les quatre zones sont définies de la manière suivante.

La première zone Z1 est située en amont de l'obstacle (plus précisément ici en amont de la première limite de protection 101), entre la trajectoire d'évitement T0 et la ligne de protection L1.

Dans cette première zone Z1, la volonté du conducteur est sensée être proche de la consigne calculée par le système AES 20, si bien que par sécurité, on ne souhaite pas que le fonctionnement du système AES puisse y être suspendu.

La seconde zone Z2 est située à hauteur et en aval de l'obstacle (plus précisément ici à hauteur en en aval de la première limite de protection 101), entre la trajectoire d'évitement T0 et la ligne de protection L1.

Parce que cette zone est située derrière l'obstacle 100 et qu'il n'y a donc plus de danger, on souhaite laisser ici au conducteur la possibilité de reprendre entièrement le contrôle du véhicule, pour autant qu'il ait les deux mains sur le volant.

La troisième zone Z3 est située en amont de l'obstacle 100 (plus précisément ici en amont de la première limite de protection 101), de l'autre côté de la trajectoire de référence T0 par rapport à la première zone Z1.

Dans cette zone, on souhaite pouvoir laisser au conducteur la possibilité de reprendre la main sur la conduite du véhicule à la condition qu'il contre fermement le système AES 20.

La quatrième zone Z4 recouvre le reste de l'environnement.

Dans cette quatrième zone, on souhaite pouvoir laisser au conducteur la possibilité de reprendre la main sur la conduite du véhicule s'il contre le système AES 20. Ainsi, dans la quatrième zone, dès que le conducteur s'oppose à la manœuvre commandée par le système AES, même souplement, la requête AES est interrompue.

Pour calculer le gain corrigé K1ᵣₜ, le calculateur 13 détermine dans laquelle de ces quatre zones le véhicule automobile 1 se trouve, puis il utilise un algorithme de calcul qui n'est pas le même d'une zone à l'autre.

Lorsque le véhicule automobile 10 change de zone, le calculateur ne change pas immédiatement d'algorithme de calcul, de façon à ne pas générer d'instabilité. Il ne change alors d'algorithme que lorsque le véhicule dépasse une trajectoire dite d'hystérésis, calculée en fonction de la trajectoire d'évitement T0.

On a représenté deux trajectoires d'hystérésis T0₁, T0₂ sur la figure 3, qui suivent la trajectoire d'évitement T0 à une distance constante prédéterminée, par exemple d'un mètre, à droite et à gauche de celle-ci.

Lorsque le véhicule automobile 10 passe de la zone Z1 à la zone Z3 (ou vice-versa), ou de la zone Z2 à la zone Z4 (ou vice-versa), le calculateur change d'algorithme de calcul uniquement après que le véhicule a traversé non seulement la trajectoire d'évitement T0, mais aussi ces deux trajectoires d'hystérésis T0₁, T0₂, ce qui permet notamment d'éviter le phénomène de bagotement entre les zones.

On peut maintenant décrire de façon détaillée comment le gain corrigé K1ᵣₜ est calculé.

La valeur de ce gain corrigé K1ᵣₜ est déduite de la valeur d'un gain K1 qui est un booléen dont la valeur est déterminée de la manière suivante.

Si, le véhicule automobile se trouve dans la première zone Z1, ce gain K1 est fixé égal à un, ce qui signifie qu'on ne souhaite pas interrompre le système AES 20.

Si, le véhicule automobile se trouve dans la deuxième zone Z2, que le conducteur a les deux mains sur le volant et que le couple au volant Cc est, en valeur absolue, supérieur à un premier seuil Cc₂, le gain K1 est fixé égal à zéro, ce qui signifie qu'on souhaite interrompre le système AES 20.

Dans toute autre situation dans la troisième zone Z2, le gain K1 est fixé égal à un.

Si, le véhicule automobile se trouve dans la troisième zone Z3 et que le conducteur a l'intention d'éviter l'obstacle par la droite (contrairement au système AES 20), tout en restant en zone Z3, c'est-à-dire en en se déportant au minimum par rapport à l'obstacle 100, le gain K1 est fixé égal à zéro, ce qui signifie qu'on souhaite interrompre le système AES 20.

Pour que le calculateur 13 considère que le conducteur a l'intention d'éviter l'obstacle par la droite en se déportant au minimum, il vérifie si le couple au volant Cc est négatif et s'il est inférieur à un seuil CC₃ₘᵢₙ négatif (par exemple -2 Nm).

En miroir, si, le véhicule automobile se trouve dans la troisième zone Z3, que le conducteur a l'intention d'éviter l'obstacle par la gauche (contrairement au système AES 20) en exerçant un couple au volant CC supérieur à un seuil CC₃ₘₐₓ (par exemple 2 Nm), et que le système AES génère un couple négatif, le gain K1 est également fixé égal à zéro, ce qui signifie qu'on souhaite interrompre le système AES 20.

Dans toute autre situation dans la troisième zone Z3, le gain K1 est fixé égal à un, ce qui signifie qu'on souhaite maintenir le système AES 20.

Si, le véhicule automobile se trouve dans la quatrième zone Z4 et que le conducteur souhaite revenir dans sa voie initiale ou au moins annuler la vitesse latérale du véhicule automobile 10 en imposant un couple au volant Cc négatif et inférieur à un seuil CC₄ₘᵢₙ lui-même négatif (par exemple -3 Nm), et que le système AES génère un couple positif, le gain K1 est fixé égal à zéro.

Si, le véhicule automobile se trouve dans la quatrième zone Z4 et que le conducteur souhaite changer de voie en continuant de s'écarter au maximum de l'obstacle 100 en imposant un couple au volant Cc positif supérieur à un seuil CC₄ₘₐₓ lui-même positif (par exemple 3 Nm), et que le système AES génère un couple négatif, le gain K1 est fixé égal à zéro.

Dans toute autre situation dans la quatrième zone Z4, le gain K1 est fixé égal à un.

On notera que dans le cas où le gain K1 est égal à zéro et qu'au moins une des conditions précitées n'est plus remplie, il est immédiatement fixé à nouveau à un.

Le calculateur 13 est alors en mesure de calculer le gain corrigé K1ᵣₜ qui est ici un nombre réel compris entre zéro et un et qui varie continûment.

Ce gain corrigé K1ᵣₜ est déterminé de façon à éviter toute modification brusque dans le pilotage du véhicule automobile 10.

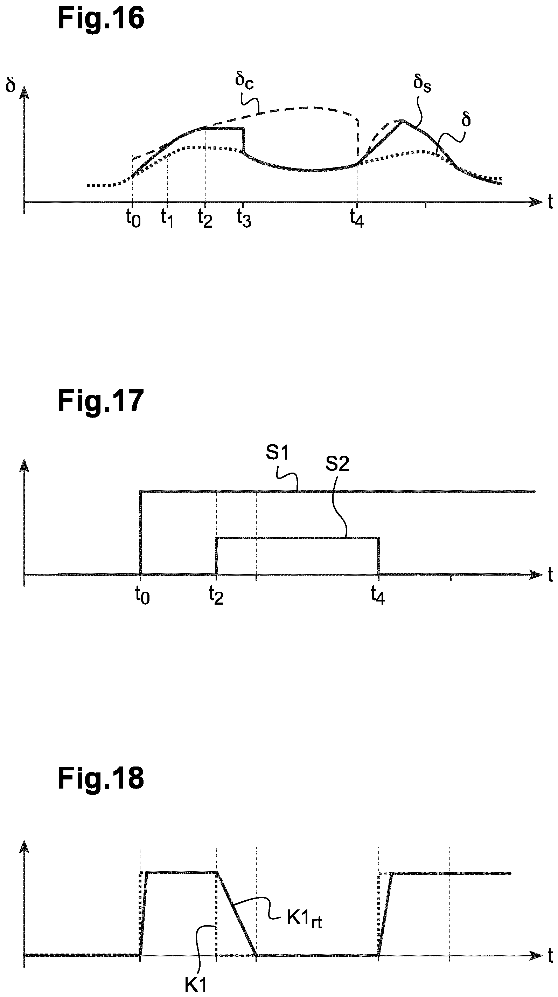

Il est prévu pour varier avec un gradient constant. En d'autres termes, la vitesse de variation de ce gain corrigé K1ᵣₜ est soit nulle (lorsque sa valeur est égale à zéro ou un), soit constante et égale à une vitesse prédéterminée. Ainsi, comme le montre la figure 18, si le gain K1 présente une variation en forme de créneaux rectangulaires, le gain corrigé K1ᵣₜ présente une variation en forme de créneaux trapézoïdaux dont les fronts montants et descendants ne sont pas verticaux mais obliques, en formes de rampes.

On pourra prévoir que la vitesse de variation en front montant soit supérieure à celle présentée en front descendants. Chaque front montant débutera lorsque le gain K1 passe de zéro à un, et chaque front descendant sera déclenché lorsque le gain K1 passera de un à zéro.

La vitesse de variation lors de chaque front montant ou descendant est déterminée en fonction de la vitesse V du véhicule et du rayon de courbure de la route, de manière à ce que l'accélération latérale du véhicule ne dépasse pas un seuil (par exemple de 1m.s⁻²).

Le gradient utilisé sera donc d'autant plus faible que la vitesse V est élevée, et d'autant plus grand que le rayon de courbure de route est grand. On pourra utiliser une cartographie permettant de déterminer le gradient à utiliser.

Une fois le gain corrigé K1ᵣₜ obtenu, ce dernier est multiplié à la consigne de couple préliminaire Ca.

Lorsque ce gain corrigé K1ᵣₜ est égal à un, ce qui signifie que le système AES 20 est opérationnel, cette consigne de couple préliminaire Ca n'est pas modifiée, et l'actionneur 15 de direction assistée est piloté par le seul système AES 20.

Lorsque le gain corrigé K1ᵣₜ est égal à zéro, ce qui signifie que le fonctionnement du système AES 20 doit être suspendu, cette consigne de couple préliminaire Ca est annulée, et l'actionneur 15 de direction assistée est piloté par le seul volant 16.

Les variations du gain corrigé K1ᵣₜ entre zéro et un permettent de passer progressivement et en douceur d'un mode de fonctionnement à l'autre en évitant les effets de seuils.

Sur la figure 2, on a représenté deux signaux SA, SB correspondant à des signaux de réinitialisation (ou « reset » en anglais).

Ces deux signaux de réinitialisation SA, SB permettent notamment de remettre à zéro le calcul de la consigne de couple préliminaire Ca et d'affecter la valeur d'angle de braquage δ mesurée à la consigne filtrée d'angle de braquage δₛ lorsque le gain corrigé K1ᵣₜ passe de zéro à une valeur non nulle.

L'intérêt de ces deux signaux apparaîtra clairement dans la suite du présent exposé, en référence aux figures 16 à 18.

On peut maintenant décrire plusieurs cas de figure illustrant l'intérêt de l'invention.

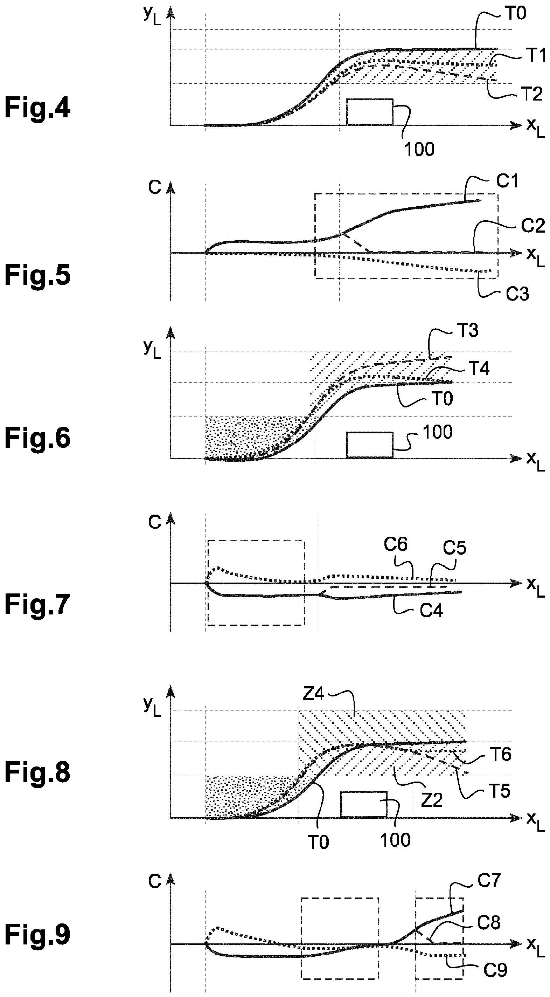

Le premier cas de figure, illustré sur les figures 4 et 5, correspond à une situation dans laquelle, après la première phase d'évitement de l'obstacle 100, le véhicule automobile 10 entre dans la deuxième zone Z2, et le conducteur souhaite revenir très rapidement dans sa voie de circulation initiale.

Dans cette situation, le conducteur tourne le volant vers la droite en exerçant un couple au volant Cc qui est négatif. Ce couple au volant est illustré sur la figure 4 par la courbe C3.

Dans cette situation, le système AES 20 calcule un couple positif (c'est-à-dire entraînant le véhicule vers la gauche) permettant de ramener le véhicule automobile 10 vers la trajectoire d'évitement T0. Ce couple est illustré sur la figure 5 par la courbe C1. La courbe T1 illustrée sur la figure 4 montre la trajectoire qui serait suivie par le véhicule automobile 10 s'il était piloté sans interrompre le fonctionnement du système AES 20.

On comprend alors que sans l'invention, c'est-à-dire sans cette possibilité d'interrompre le système AES 20, le couple au volant et le couple généré par le système AES seront opposés, ce qui créera un mauvais ressenti pour le conducteur.

Or la situation ici envisagée étant sans danger, elle n'impose pas de contrer la volonté du conducteur.

Alors, grâce à l'invention, le gain K1 est choisi égal à zéro, si bien que le gain corrigé K1ᵣₜ, va passer continûment de un à zéro. La consigne de couple intermédiaire Ci va alors diminuer progressivement jusqu'à s'annuler (voir la courbe C2 sur la figure 5), ce qui permettra au véhicule de revenir vers la voie initiale (voir la trajectoire T2 illustrée sur la figure 4), comme le souhaite le conducteur.

Le second cas de figure, illustré sur les figures 6 et 7, correspond à une situation dans laquelle le conducteur souhaiterait réaliser un évitement plus grand que celui prévu par le système AES 20, afin par exemple de changer de voie de circulation.

Dans cette situation, après avoir dépassé l'obstacle 100 le conducteur continue de tourner le volant vers la gauche en exerçant un couple au volant Cc qui est positif. Ce couple au volant est illustré sur la figure 6 par la courbe C6.

Le système AES 20 calcule pour sa part un couple négatif (c'est-à-dire entraînant le véhicule vers la droite) permettant de ramener le véhicule automobile 10 vers la trajectoire d'évitement T0. Ce couple est illustré sur la figure 7 par la courbe C4. La courbe T4 illustrée sur la figure 6 montre la trajectoire qui serait suivie par le véhicule automobile 10 s'il était piloté sans interrompre le fonctionnement du système AES 20.

On comprend alors que sans l'invention, le couple au volant et le couple généré par le système AES seront opposés. Cette situation étant sans danger, elle n'impose pas de contrer la volonté du conducteur.

Alors, grâce à l'invention, le gain K1 est choisi égal à zéro, si bien que le gain corrigé K1ᵣₜ, va passer continûment de un à zéro. La consigne de couple intermédiaire Ci va alors augmenter progressivement jusqu'à s'annuler (voir la courbe C5 sur la figure 7), ce qui permettra au véhicule d'aller sur une autre voie de circulation (voir la trajectoire T3 illustrée sur la figure 6), comme le souhaite le conducteur.

Le troisième cas de figure, illustré sur les figures 8 et 9, correspond à une situation dans laquelle le conducteur souhaiterait réaliser un évitement plus grand que celui prévu par le système AES 20, puis souhaiterait revenir rapidement vers sa voie de circulation initiale.

Au début de l'évitement, le conducteur tourne fortement le volant vers la gauche puis, lorsque le véhicule entre dans la quatrième zone Z4, il exerce au contraire un couple négatif sur le volant. Ce couple au volant est illustré sur la figure 8 par la courbe C9.

Dès le début de l'évitement, pour ramener le véhicule automobile 10 vers la trajectoire d'évitement T0, le système AES 20 calcule alors un couple négatif (c'est-à-dire entraînant le véhicule vers la droite). Ce couple est illustré sur la figure 9 par la courbe C7. La courbe T6 illustrée sur la figure 8 montre la trajectoire qui serait suivie par le véhicule automobile 10 s'il était piloté sans interrompre le fonctionnement du système AES 20.

Tant que le véhicule est dans la zone Z4 et qu'il est jugé non souhaitable d'interrompre le fonctionnement du système AES 20, le gain K1 est maintenu égal à un.

En revanche, lorsque le véhicule entre dans la deuxième zone Z2, et que le conducteur maintient sa volonté de revenir rapidement vers la voie de circulation initiale, il va arriver un moment où le couple au volant Cc et le couple généré par le système AES seront de signes opposés. Cette situation étant considérée sans danger, elle n'impose pas de contrer la volonté du conducteur.

Alors, grâce à l'invention, le gain K1 est choisi égal à zéro, si bien que le gain corrigé K1ᵣₜ, va passer continûment de un à zéro. La consigne de couple intermédiaire Ci imposée par l'actionneur 15 va alors diminuer progressivement jusqu'à s'annuler (voir la courbe C8 sur la figure 9), ce qui permettra au véhicule de revenir rapidement vers sa voie de circulation initiale (voir la trajectoire T5 illustrée sur la figure 8), comme le souhaite le conducteur.

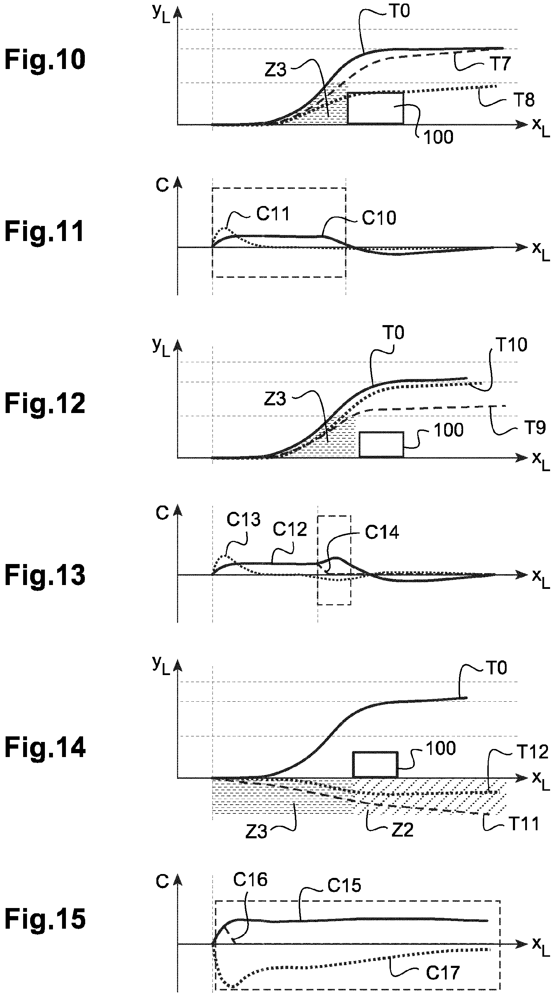

Le quatrième cas de figure, illustré sur les figures 10 et 11, correspond à une situation dans laquelle le conducteur souhaite réaliser un évitement de l'obstacle 100 par la gauche mais dans laquelle le couple qu'il exerce sur le volant n'est pas suffisant pour éviter effectivement l'obstacle 100.

Dans cette situation, le conducteur exerce donc un couple au volant Cc positif et suffisamment élevé uniquement lorsqu'il détecte l'obstacle, puis il relâche trop rapidement cet effort. Ce couple au volant est illustré sur la figure 11 par la courbe C11. La courbe T8 illustrée sur la figure 10 montre la trajectoire qui serait suivie par le véhicule automobile 10 s'il était piloté par le seul conducteur.

Dans cette situation, tant que le véhicule automobile 10 est en amont de l'obstacle 100, dans la zone Z3, le système AES 20 calcule un couple positif (c'est-à-dire entraînant le véhicule vers la gauche) permettant de ramener le véhicule automobile 10 vers la trajectoire d'évitement T0. Ce couple est illustré sur la figure 11 par la courbe C10.

Cette situation est donc potentiellement dangereuse, si bien qu'elle impose de contrer la volonté du conducteur et de ne pas interrompre le fonctionnement du système AES 20.

Alors, grâce à l'invention, le gain K1 est maintenu égal à un, si bien que le couple au volant Cc a une influence réduite sur la trajectoire empruntée par le véhicule.

La courbe T7 illustrée sur la figure 10 montre la trajectoire qui sera alors suivie par le véhicule automobile 10.

Le cinquième cas de figure, illustré sur les figures 12 et 13, correspond à une situation dans laquelle le conducteur réalise un évitement satisfaisant de l'obstacle 100 mais ne souhaite ensuite pas être trop dévié de la voie initiale qu'il empruntait pour passer à distance réduite de l'obstacle 100.

Dans cette situation, le conducteur tourne initialement le volant vers la gauche en exerçant un couple au volant Cc qui est positif, puis il ramène le volant vers la droite en exerçant un couple négatif avant même que le véhicule automobile 10 ne se trouve à la hauteur de l'obstacle 100. Ce couple au volant est illustré sur la figure 13 par la courbe C13.

Dans cette situation, le système AES 20 calcule un couple qui est positif (c'est-à-dire entraînant le véhicule vers la gauche) tant que le véhicule est en amont de l'obstacle 100. Ce couple est illustré sur la figure 13 par la courbe C12.

La courbe T10 illustrée sur la figure 12 montre la trajectoire qui serait suivie par le véhicule automobile 10 s'il était piloté sans interrompre le fonctionnement du système AES 20.

On comprend alors que sans l'invention, c'est-à-dire sans possibilité d'interrompre le fonctionnement du système AES 20, le couple au volant et le couple généré par le système AES seront initialement de mêmes signes puis vont s'opposer, ce qui créera un mauvais ressenti pour le conducteur.

La situation ici considérée étant sans danger, elle n'impose pas de contrer la volonté du conducteur.

Alors, grâce à l'invention, le gain K1 est initialement maintenu égal à un, puis il va être ramené à zéro au moment où le couple au volant Cc devient négatif et inférieur à au seuil CC₃ₘᵢₙ (-2 Nm). Dès lors, le gain corrigé K1ᵣₜ, va passer continûment de un à zéro. La consigne de couple intermédiaire Ci va alors diminuer progressivement jusqu'à s'annuler (voir la courbe C14 sur la figure 13), ce qui permettra au véhicule de passer à distance réduite de l'obstacle 100 (voir la trajectoire T9 illustrée sur la figure 12), comme le souhaite le conducteur.

Le sixième cas de figure, illustré sur les figures 14 et 15, correspond à une situation dans laquelle le conducteur souhaite éviter l'obstacle 100 par la droite alors que la trajectoire d'évitement T0 passe par la gauche de l'obstacle 100.

Dans cette situation, le conducteur tourne quant à lui le volant vers la droite en exerçant un couple au volant Cc qui est toujours négatif et élevé. Ce couple au volant est illustré sur la figure 15 par la courbe C17.

Dans cette situation, le système AES 20 calcule un couple qui est positif (c'est-à-dire entraînant le véhicule vers la gauche). Ce couple est illustré sur la figure 15 par la courbe C15.

La courbe T12 illustrée sur la figure 14 montre la trajectoire qui serait suivie par le véhicule automobile 10 s'il était piloté sans interrompre le fonctionnement du système AES 20. On constate que le couple imposé par le conducteur est suffisamment élevé pour contrer celui imposé par le système AES. Il n'en demeure pas moins que le ressenti est très désagréable pour le conducteur.

Dans cette situation, on souhaite donc pouvoir laisser au conducteur le choix du côté par lequel il souhaite éviter l'obstacle 100.

Alors, grâce à l'invention, le gain K1 est fixé égal à zéro, si bien que le gain corrigé K1ᵣₜ, va passer continûment de un à zéro. La consigne de couple finale Cr imposée par l'actionneur 15 va alors diminuer progressivement jusqu'à s'annuler (voir la courbe C16 sur la figure 15), ce qui permettra au véhicule d'éviter l'obstacle par la droite (voir la trajectoire T11 illustrée sur la figure 14), comme le souhaite le conducteur.

Sur les figures 16 à 18, on a représenté on exemple d'évolution dans le temps de paramètres, permettant de bien illustrer l'invention.

Sur la figure 17, on observe grâce au signal S1 que le système AES s'active à un instant t₀ qui correspond au moment de la détection d'un obstacle 100 sur la trajectoire initiale du véhicule automobile 10, à proximité de ce dernier. On observe par ailleurs, grâce au signal S2, qu'on souhaite suspendre le fonctionnement du système AES entre des instants t₂ et t₄.

Sur la figure 16, on observe l'évolution :
- de la consigne préliminaire d'angle de braquage δ_{c},
- de la consigne d'angle de braquage saturée δₛ, et
- de l'angle de braquage mesuré δ.

On observe qu'à l'instant t₀ de la détection de l'obstacle, il faudrait que l'angle de braquage soit directement plus élevé que celui effectivement mesuré.

Grâce au contrôleur qui sature la consigne préliminaire d'angle de braquage δ_{c}, la vitesse de variation de la consigne d'angle de braquage saturée δₛ va rester, entre les instants t₀ et t₁, restreinte pour ne pas générer d'instabilité.

Entre les instants t₁ et t₂, il ne sera plus nécessaire de saturer en amplitude ou en vitesse de variation la consigne préliminaire d'angle de braquage δ_{c}, si bien que la consigne d'angle de braquage saturée δₛ sera égale à cette dernière.

A l'instant t₂, comme le montre la figure 18, le gain K1 est mis à zéro pour interrompre le fonctionnement du système AES 20.

Le gain corrigé K1ᵣₜ va alors diminuer linéairement jusqu'à atteindre, à un instant t₃, la valeur nulle.

Alors que la consigne préliminaire d'angle de braquage δ_{c} continue d'augmenter, la consigne d'angle de braquage saturée δₛ va alors être maintenue constante entre les instants t₂ et t₃, grâce aux signaux de réinitialisation SA, SB.

A l'instant t₃ et jusqu'à l'instant t₄, la consigne d'angle de braquage saturée δₛ va ensuite être maintenue égale à l'angle de braquage mesuré δ. De cette façon, la consigne de couple intermédiaire Ci est maintenue égale à zéro, ce qui laisse le conducteur seul maître de la manoeuvre.

A l'instant t₄, comme le montre la figure 18, le gain K1 est mis à un pour suspendre l'interruption du fonctionnement du système AES 20.

Le gain corrigé K1ᵣₜ va alors augmenter linéairement jusqu'à atteindre lui aussi la valeur un.

A cet instant t₄, grâce aux signaux de réinitialisation SA, SB, la consigne préliminaire d'angle de braquage δ_{c} va être ramenée égale à l'angle de braquage mesuré δ. Elle va ensuite augmenter très rapidement.

Grâce au contrôleur qui sature la consigne préliminaire d'angle de braquage δ_{c}, la vitesse de variation de la consigne d'angle de braquage saturée δₛ va rester, dans cette situation, restreinte pour ne pas générer d'instabilité.

On constate sur la figure 16 que l'angle de braquage mesuré δ ne suit pas correctement la consigne d'angle de braquage saturée δₛ, du fait du couple toujours imposé par le conducteur sur le volant 16. En effet, la trajectoire réalisée est la résultante du couple conducteur et de la requête AES. Si le conducteur se manifeste activement au volant, il reprend alors la main.

La présente invention n'est nullement limitée aux modes de réalisation décrits et représentés, mais l'homme du métier saura y apporter toute variante conforme à l'invention, telle que définie par les revendications ci-jointes.

Ainsi, le procédé pourra s'appliquer à d'autres types de domaines dans lesquels une trajectoire particulière doit être suivie, par exemple en aéronautique ou en robotique.

## Revendications

1. Procédé de pilotage autonome d'un actionneur (15) d'un système de pilotage (18) d'un appareil (10) automobile, comportant des étapes de :
- détermination d'une trajectoire de référence (T0) de façon à ce que l'appareil (10) évite un obstacle (100), ,
- détermination de la position dudit appareil (10) par rapport à la trajectoire de référence (T0),
- acquisition d'un paramètre (Cc) relatif à l'effort exercé par le conducteur sur un moyen de commande manuel (16) dudit système de pilotage (18),
- calcul par un calculateur (13) d'une consigne de pilotage (Cr) dudit actionneur (15),
dans lequel la consigne de pilotage (Cr) est calculée en fonction dudit paramètre (Cc) et de la position dudit appareil (10) par rapport à la trajectoire de référence (T0) et
dans lequel, étant considérée au moins deux zones de l'environnement dudit appareil (10) dont les limites dépendent de la position de l'obstacle (100), de la position de la trajectoire de référence (T0) par rapport à l'obstacle (100) et d'une ligne de protection (L1) au-delà de laquelle toute collision avec l'obstacle (100) est évitée, le calcul de la consigne de pilotage (Cr) est réalisé :
- en déterminant la zone dans laquelle se trouve ledit appareil (10),
- en utilisant un algorithme de calcul de la consigne de pilotage (Cr) qui est sélectionné en fonction de la zone dans laquelle se trouve ledit appareil (10).

2. Procédé de pilotage selon la revendication précédente, dans lequel l'appareil (10) est un véhicule automobile qui est adapté à rouler sur route et qui comprend au moins une roue directrice (11), dans lequel le moyen de commande manuel (16) est un volant, dans lequel ledit système de pilotage (18) permet le braquage de chaque roue directrice (11), et dans lequel le paramètre (Cc) est relatif au couple (Cc) exercé par le conducteur du véhicule automobile sur le volant.

3. Procédé de pilotage selon l'une des revendications précédentes, dans lequel il est prévu de déterminer un indicateur (K1) dont la valeur dépend de la zone dans laquelle se trouve ledit appareil (10) et dudit paramètre (Cc), dans lequel il est prévu d'élaborer une consigne préliminaire (Ca) de pilotage dudit actionneur (15) permettant de ramener ledit appareil (10) vers la trajectoire de référence (T0), et dans lequel il est prévu de corriger la consigne préliminaire (Ca) en fonction de la valeur dudit indicateur (K1).

4. Procédé de pilotage selon la revendication précédente, dans lequel ledit indicateur (K1) est adapté à prendre uniquement l'une ou l'autre de deux valeurs, dans lequel il est prévu de déterminer, en fonction dudit indicateur (K1), un indicateur corrigé (K1ᵣₜ) qui varie continûment entre deux valeurs, et dans lequel la consigne préliminaire (Ca) est corrigée en multipliant sa valeur par celle de l'indicateur corrigé (K1 rt).

5. Procédé de pilotage selon la revendication précédente, dans lequel, l'appareil (10) étant un véhicule automobile qui est adapté à rouler sur route, lorsque ledit indicateur corrigé (K1ᵣₜ) varie, la vitesse de variation dudit indicateur corrigé (K1ᵣₜ) est déterminée en fonction d'une vitesse dudit véhicule automobile et du rayon de courbure de la route, de manière à ce que l'accélération latérale du véhicule automobile ne dépasse pas un seuil déterminé.

6. Procédé de pilotage selon l'une des trois revendications précédentes, dans lequel la consigne préliminaire (Ca) est déduite d'une consigne d'angle de braquage des roues (δ_{c}) qui est elle-même calculée en fonction de la position dudit appareil (10) par rapport à la trajectoire de référence (T0) et qui est filtrée au moyen d'un contrôleur qui satisfait un modèle limiteur d'amplitude de consigne et un modèle limiteur de variation de consigne.

7. Procédé de pilotage selon l'une des revendications précédentes, dans lequel la calculateur considère quatre zones associées à quatre algorithmes de calcul différent, dont :
- une zone (Z1) située en amont de l'obstacle (100), entre la trajectoire de référence (T0) et une ligne de protection (L1) au-delà de laquelle toute collision avec l'obstacle (100) est évitée,
- une zone (Z2) située à hauteur et en aval de l'obstacle (100), entre la trajectoire de référence (T0) et la ligne de protection (L1),
- une zone (Z3) située en amont de l'obstacle (100), du côté de la trajectoire de référence (T0) qui est opposé à la ligne de protection (L1), et
- une zone (Z4) dont une partie est située en amont de l'obstacle (100), du côté de la ligne de protection (L1) qui est opposé à la trajectoire de référence (T0), et dont une autre partie est située à hauteur et en aval de l'obstacle (100), du côté de la trajectoire de référence (T0) qui est opposé à la ligne de protection (L1).

8. Procédé de pilotage selon l'une des revendications précédentes, dans lequel, lorsque ledit appareil (10) se déplace d'une première zone à une seconde zone, le calculateur (13) continue d'utiliser l'algorithme associé à la première zone tant que ledit appareil n'a pas dépassé une trajectoire d'Hystérésis (T0₁, T0₂) déterminée en fonction de la trajectoire de référence (T0).

9. Appareil (10) automobile comprenant au moins un actionneur qui est adapté à influer sur la trajectoire dudit appareil (10) et un calculateur (13) pour piloter ledit actionneur, **caractérisé en ce que** le calculateur (13) est programmé pour mettre en œuvre un procédé selon l'une des revendications précédentes.

## Patentansprüche

1. Verfahren zum autonomen Steuern eines Stellglieds (15) eines Steuerungssystems (18) eines automobilen Geräts (10) mit den Schritten des:
- Bestimmens einer Bezugsfahrstrecke (T0), damit das Gerät (10) ein Hindernis (100) vermeidet,
- Bestimmens der Position des Geräts (10) in Bezug auf die Bezugsfahrstrecke (T0),
- Erfassens eines Parameters (Cc) bezüglich der durch den Fahrer ausgeübten Kraft auf ein Mittel (16) zum Steuern des Steuerungssystems (18) von Hand,
- Berechnens eines Steuerungsbefehls (Cr) für das Stellglied (15) durch einen Rechner (13),
bei dem der Steuerungsbefehl (Cr) in Abhängigkeit von dem Parameter (Cc) und der Position des Geräts (10) in Bezug auf die Bezugsfahrstrecke (T0) berechnet wird und
bei dem, unter Berücksichtigung von mindestens zwei Umgebungsbereichen des Geräts (10), deren Grenzen von der Position des Hindernisses (100), von der Position der Bezugsfahrstrecke (T0) und von einer Schutzlinie (L1), außerhalb derer jegliche Kollision mit dem Hindernis (100) vermieden wird, abhängen, die Berechnung des Steuerungsbefehls (Cr) erfolgt:
- indem der Bereich bestimmt wird, in dem sich das Gerät (10) befindet,
- indem ein Rechenalgorithmus des Steuerungsbefehls (Cr) verwendet wird, der in Abhängigkeit von dem Bereich ausgewählt wird, in dem sich das Gerät (10) befindet.

2. Steuerungsverfahren gemäß dem vorangehenden Anspruch, bei dem das Gerät (10) ein Kraftfahrzeug ist, das dazu ausgelegt ist, auf einer Straße zu fahren, und das mindestens ein lenkbares Rad (11) aufweist, bei dem das Mittel (16) zum Steuern von Hand ein Lenkrad ist, bei dem das Steuerungssystem (18) das Einschlagen jedes lenkbaren Rads (11) ermöglicht und bei dem der Parameter (Cc) sich sur ein vom Fahrer des Kraftfahrzeugs auf das Lenkrad ausgeübten Drehmoment (Cc) bezieht.

3. Steuerungsverfahren gemäß einem der vorangehenden Ansprüche, bei dem vorgesehen ist, einen Indikator (K1) zu bestimmen, dessen Wert vom Gebiet, in dem sich das Gerät (10) befindet, und vom Parameter (Cc) abhängt, bei dem vorgesehen ist, eine vorläufige Steuerungsanweisung (Ca) für das Stellglied (15) auszuarbeiten, die ermöglicht, das Gerät (10) zur Bezugsfahrstrecke (T0) zurückzuholen und bei dem vorgesehen ist, die vorläufige Steuerungsanweisung (Ca) in Abhängigkeit vom Wert des Indikators (K1) zu korrigieren.

4. Steuerungsverfahren gemäß dem vorangehenden Anspruch, bei dem der Indikator (K1) dazu ausgelegt ist, nur den einen oder den anderen zweier Werte zu nehmen, bei dem vorgesehen ist, in Abhängigkeit vom Indikator (K1) einen korrigierten Indikator (K1rt) zu bestimmen, der kontinuierlich zwischen zwei Werten variiert, und bei dem die vorläufige Steuerungsanweisung (Ca) korrigiert wird, indem deren Wert mit dem Wert des korrigierten Indikators (K1rt) multipliziert wird.

5. Steuerungsverfahren gemäß dem vorangehenden Anspruch, bei dem, nachdem das Gerät (10) ein Kraftfahrzeug ist, das dafür ausgelegt ist, auf einer Straße zu fahren, und wenn der korrigierte Indikator (K1rt) variiert, die Geschwindigkeit der Änderung des korrigierten Indikators (K1rt) in Abhängigkeit von einer Geschwindigkeit des Kraftfahrzeugs und des Krümmungsradius der Straße bestimmt wird, damit die seitliche Beschleunigung des Kraftfahrzeugs eine bestimmte Schwelle nicht überschreitet.

6. Steuerungsverfahren gemäß einem der drei vorangehenden Ansprüche, bei dem die vorläufige Steuerungsanweisung (Ca) von einer Radeinschlagsanweisung (δc) abgeleitet wird, die ihrerseits in Abhängigkeit von der Position des Geräts (10) in Bezug auf die Bezugsfahrstrecke (T0) berechnet wird und die mittels einer Kontrollvorrichtung gefiltert wird, die einem Modell für die Begrenzung der Amplitude der Weisung und einem Modell für die Begrenzung der Änderung der Weisung gerecht wird.

7. Steuerungsverfahren gemäß einem der vorangehenden Ansprüche, bei dem der Rechner vier Zonen berücksichtigt, die vier verschiedenen Berechnungsalgorithmen zugeordnet sind:
- einer Zone (Z1), die vor dem Hindernis (100), zwischen der Bezugsfahrstrecke (T0) und einer Schutzlinie (L1), jenseits derer jegliche Kollision mit dem Hindernis (100) vermieden wird, gelegen ist,
- einer Zone (Z2), die in Höhe und nach dem Hindernis (100), zwischen der Bezugsfahrstrecke (T0) und der Schutzlinie (L1), gelegen ist,
- einer Zone (Z3), die vor dem Hindernis (100), auf der von der Schutzlinie (L1) der Bezugsfahrstrecke (T0) abgewandten Seite, liegt, und
- einer Zone (Z4), von der ein Teil vor dem Hindernis (100), auf der von der Schutzlinie (L1) der Bezugsfahrstrecke (T0) abgewandten Seite, und ein anderer Teil nach dem Hindernis (100), auf der von der Schutzlinie (L1) der Bezugsfahrstrecke (T0) abgewandten Seite, liegt.

8. Steuerungsverfahren gemäß einem der vorangehenden Ansprüche, bei dem, wenn sich das Gerät (10) von einer ersten Zone zu einer zweiten Zone bewegt, der Rechner (13) den der ersten Zone zugeordneten Algorithmus weiterverwendet, solange das Gerät eine in Abhängigkeit von der Bezugsfahrstrecke (T0) bestimmte Hysteresestrecke (T0₁, T0₂) nicht überschreitet.

9. Automobiles Gerät (10) mit mindestens einem Stellglied, das dazu ausgelegt ist, auf die Fahrtstrecke des Geräts (10) Einfluß zu nehmen, und einem Rechner (13) zum Steuern des Betätigers, **dadurch gekennzeichnet, daß** der Rechner (13) dazu programmiert ist, ein Steuerungsverfahren gemäß einem der vorangehenden Ansprüche durchzuführen.

## Claims

1. A method for autonomously controlling an actuator (15) of a control system (18) of an automotive device (10), the method comprising:
determining a reference trajectory (T0) such that the device (10) avoids an obstacle (100);
determining a position of the device (10) with respect to a position of the reference trajectory (T0);
acquiring a parameter (Cc) relating to a force exerted by a driver on a manual control device (16) of the control system (18);
calculating, by a computer (13), a controlling setpoint (Cr) of the actuator (15);
wherein the controlling setpoint (Cr) is calculated as a function of the parameter (Cc) and of the position of the device (10) with respect to the reference trajectory (T0), and
wherein, taking into consideration at least two zones of an environment of the device (10) whose limits depend on a position of the obstacle, the position of the reference trajectory (T0) with respect to the obstacle, and a protection line beyond which any collision with the obstacle is avoided,
the calculating of the controlling setpoint is performed by:
- determining the zone in which the device (10) is located,
- using an algorithm for calculating the controlling setpoint (Cr) which is selected as a function of the zone in which the device (10) is located.

2. The control method as claimed in the preceding claim, wherein
the device (10) is a motor vehicle which is suitable for traveling on roads and which comprises at least one steered wheel (11), wherein the manual control device (16) is a steering wheel, wherein the control system (18) allows each steered wheel (11) to be steered, and wherein the parameter (Cc) relates to a torque (Cc) exerted by the driver of the motor vehicle on the steering wheel.

3. The control method as claimed in one of the preceding claims, wherein
provision is made to determine an indicator (K1) the value of which depends on the zone in which the device (10) is located and on said parameter (Cc), wherein provision is made to generate a preliminary controlling setpoint (Ca) of the actuator (15) that makes it possible to bring the device (10) to the reference trajectory (T0), and wherein provision is made to correct the preliminary setpoint (Ca) as a function of the value of the indicator (K1).

4. The control method as claimed in the preceding claim, wherein
the indicator (K1) is adapted to take only one or other of two values, wherein provision is made to determine, as a function of the indicator (K1), a corrected indicator (K1ᵣₜ) which varies continually between two values, and wherein the preliminary setpoint (Ca) is corrected by multiplying its value by that of the corrected indicator (K1ᵣₜ).

5. The control method as claimed in the preceding claim, wherein
the device (10) being a motor vehicle which is suitable for traveling on a road, when the corrected indicator (K1ᵣₜ) varies, the rate of variation of the corrected indicator (K1ᵣₜ) is determined as a function of a speed of the motor vehicle and of a radius of curvature of the road, such that the lateral acceleration of the motor vehicle does not exceed a determined threshold.

6. The control method as claimed in one of the three preceding claims, wherein
the preliminary setpoint (Ca) is deduced from a steering angle setpoint (δ_{c}) of the wheels which is itself calculated as a function of the position of the device (10) with respect to the reference trajectory (T0) and which is filtered using a controller which satisfies a setpoint amplitude limiting model and a setpoint variation limiting model.

7. The control method as claimed in one of the preceding claims, wherein
the computer considers four zones associated with four different computation algorithms, including:
a zone (Z1) situated upstream of the obstacle (100), between the reference trajectory (T0) and a protection line (L1) beyond which any collision with the obstacle (100) is avoided,
a zone (Z2) situated level with and downstream of the obstacle (100), between the reference trajectory (T0) and the protection line (L1),
a zone (Z3) situated upstream of the obstacle (100), on the side of the reference trajectory (T0) which is opposite the protection line (L1), and
a zone (Z4) of which a part is situated upstream of the obstacle (100), on the side of the protection line (L1) which is opposite the reference trajectory (T0), and of which another part is situated level with and downstream of the obstacle (100), on the side of the reference trajectory (T0) which is opposite the protection line (L1).

8. The control method as claimed in one of the preceding claims, wherein
when the device (10) moves from a first zone to a second zone, the computer (13) continues to use the algorithm associated with the first zone as long as the device (10) has not gone beyond a hysteresis trajectory (T0₁, T0₂) determined as a function of the reference trajectory (T0).

9. An automotive device (10) comprising:
at least one actuator which is adapted to influence a trajectory of the automotive device (10), and a computer (13) programmed to control the at least one actuator, the computer (13) being programmed to implement the method as claimed in one of the preceding claims.
